# EUROPEAN PATENT SPECIFICATION

(11) **EP 3 922 822 B1**
(45) Date of publication and mention of the grant of the patent: **22.04.2026**
(21) Application number: 21164576.7
(22) Date of filing: 18.06.2012
(51) Int. Cl.: F01D 25/16, F02C 7/36

(54) **ENGINE BEARING SUPPORT**
MOTORLAGERTRÄGER
SUPPORT DE PALIER DE MOTEUR

(30) Priority: 17.06.2011 US 201161498515 P; 31.01.2012 US 201261593181 P; 15.06.2012 US 201213524527
(43) Date of publication of application: 15.12.2021
(62) Divisional of application: 12172460.3
(73) Proprietor: RTX Corporation, Farmington, CT 06032 (US)
(72) Inventor: REINHARDT, Gregory E., South Glastonbury, CT Connecticut 06073 (US); DiBENEDETTO, Enzo, Berlin, CT Connecticut 06037 (US); MAZANEC, Jason W., Willington, CT Connecticut 06279 (US)
(74) Representative: Dehns

(56) References cited:
- EP-A1- 2 194 238
- EP-A2- 1 921 253
- EP-A2- 2 325 458
- GB-A- 2 199 375

## Description

### BACKGROUND

The disclosure relates to gas turbine engines. More particularly, the disclosure relates to turbofan engines with speed reducing transmissions. A complicating factor in any engine design is the need to enable the engine to flex sufficiently while at the same time accounting for tension loads and torsional stresses experienced by the engine while in flight.

Prior art turbofan engines having the features of the preamble to claim 1 are disclosed in EP 1,921,253 A2 and GB 2,199,375 A.

### SUMMARY

The present disclosure provides a turbofan engine according to claim 1.

Features of embodiments are recited in the dependent claims.

### BRIEF DESCRIPTION OF THE DRAWINGS

FIG. 1 is a longitudinal axial sectional/cutaway view of an embodiment of a turbofan engine.
FIG. 2 is a longitudinal axial sectional/cutaway view of a forward portion of the engine of FIG. 1.
FIG. 3 is a longitudinal axial sectional/cutaway view of a forward portion of the engine of FIG. 1.
FIG. 4 is partial transverse sectional/cutaway view of a forward portion of the engine of FIG. 1.
FIG. 5 is partial transverse sectional/cutaway view of a forward portion of the engine of FIG. 1.
FIG. 6 is a longitudinal axial sectional/cutaway view of a forward portion of an alternate engine embodiment.
FIG. 7 is a longitudinal axial/sectional cutaway view of a forward portion of a second alternate engine embodiment.
FIG. 8 is a longitudinal axial/sectional cutaway view of a forward portion of a third alternate engine embodiment.

Like reference numbers and designations in the various drawings indicate like elements.

### DETAILED DESCRIPTION

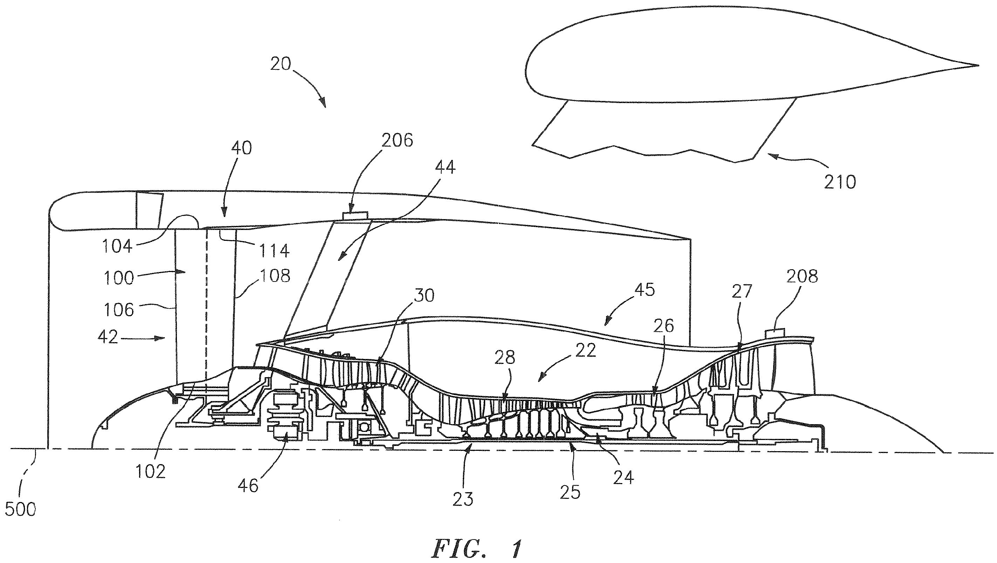

FIG. 1 shows a turbofan engine 20 having an engine case 22 containing a rotor shaft assembly 23. An exemplary engine is a high-bypass turbofan. In such an engine, the normal cruise condition ratio of air mass flowing outside the core (e.g., the compressor sections and combustor) to air mass passing through the core (the bypass ratio) is typically in excess of about 4.0 and, more narrowly, typically between about 4.0 and about 16.0. Via high 24 and low 25 shaft portions of the shaft assembly 23, a high pressure turbine (HPT) section 26 and a low pressure turbine (LPT) section 27 respectively drive a high pressure compressor (HPC) section 28 and a low pressure compressor (LPC) section 30. The engine extends along a longitudinal axis (centerline) 500 from a fore end to an aft end. Adjacent the fore end, a shroud (fan case) 40 encircles a fan 42 and is supported by vanes 44. An aerodynamic nacelle around the fan case is shown and an aerodynamic nacelle 45 around the engine case is shown.

Although a two-spool (plus fan) engine is shown, an alternative variation involves a three-spool (plus fan) engine wherein an intermediate spool comprises an intermediate pressure compressor (IPC) between the LPC and HPC and an intermediate pressure turbine (IPT) between the HPT and LPT.

In the exemplary embodiment, the low shaft portion 25 of the rotor shaft assembly 23 drives the fan 42 through a reduction transmission 46. An exemplary reduction transmission is an epicyclic transmission, namely a planetary or star gear system.

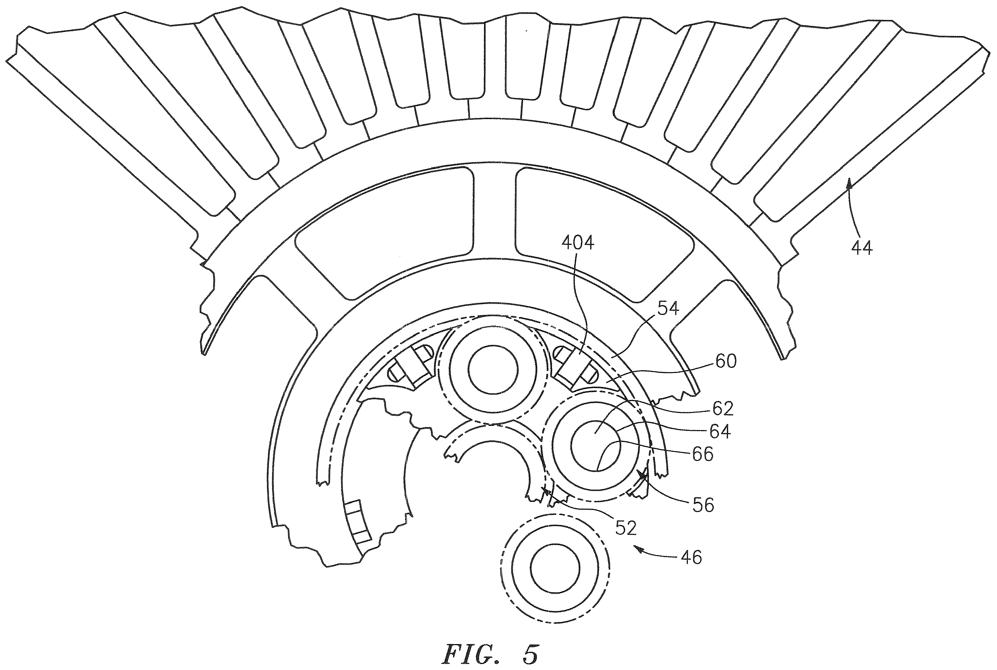

FIG. 5 schematically shows details of the exemplary transmission 46. A forward end of the low shaft is coupled to a sun gear 52. The externally-toothed sun gear is encircled by an internally-toothed ring gear 54. The exemplary ring gear is coupled to the fan to rotate with the fan as a unit.

A number of externally-toothed star gears 56 are positioned between and enmeshed with the sun gear and ring gear. A cage or star carrier assembly 60 carries the star gears via associated journals 62. The exemplary star carrier is substantially non-rotatably mounted relative to the engine case 22. The journals have circumferential surface portions 64 closely accommodated within internal bore surfaces 66 of the associated star gears.

Other combinations of which of the sun, star carrier and ring are mounted to the fan, low shaft, fixed structure (case) (or are permitted to rotate freely) are possible.

The speed reduction ratio is determined by the ratio of diameters of the ring gear to the sun gear. This ratio will substantially determine the maximum number of star gears in a given ring. The actual number of star gears will be determined by stability and stress/load sharing considerations. An exemplary reduction is between about 2:1 and about 13:1. An exemplary number of star gears is between about 3 and about 11.

The fan comprises a rotor having a plurality of aerodynamic blades 100 (FIG. 1) arrayed around the centerline 500. The fan provides the primary motive air flow to the gas generator air stream (the core flow) and the fan duct flow (the bypass flow). Air exiting the fan rotor has increased pressure and axial and tangential flow velocity. The bypass flow velocity may be redirected or straightened by the structural guide vanes 44. The fan blade airfoils extend from inboard ends 102 to outboard tips 104, and have a leading edge 106, a trailing edge 108, a pressure side, and a suction side. The tips are in close facing proximity to a rub strip 114 along the interior of the fan case.

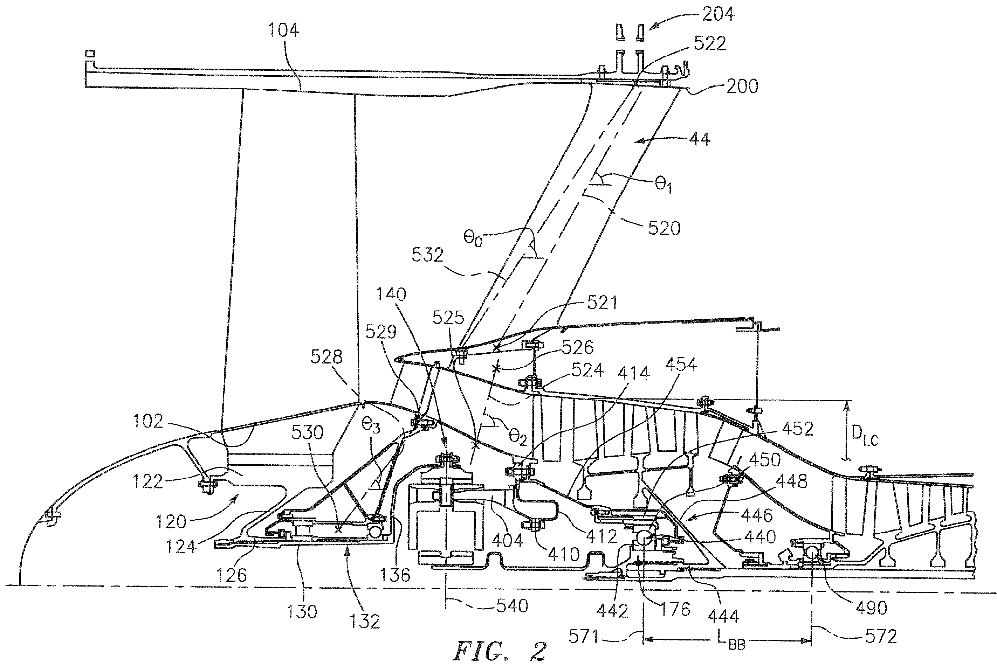

At the inboard ends 102, the blades (if separate) are attached to a fan disk 120 (FIG. 2) which transmits torque to the blades and provides support and retention to the blades. The exemplary disk comprises an outer ring 122 to which the blades are attached and a forwardly, inwardly tapering web 124. At its inboard end, the web 124 joins a collar 126 which receives a forward portion of a tubular portion 130 of a fan shaft 132. At a rearward end, the fan shaft tubular portion joins a partially radial web or hub 136 which extends outward and then axially aftward and is secured to a bolting flange 140 on the periphery of the ring gear 54. As is discussed below, the fan shaft 132, via this web 136, both receives torque from the LPT (via the transmission) and provides radial and axial positioning to the transmission.

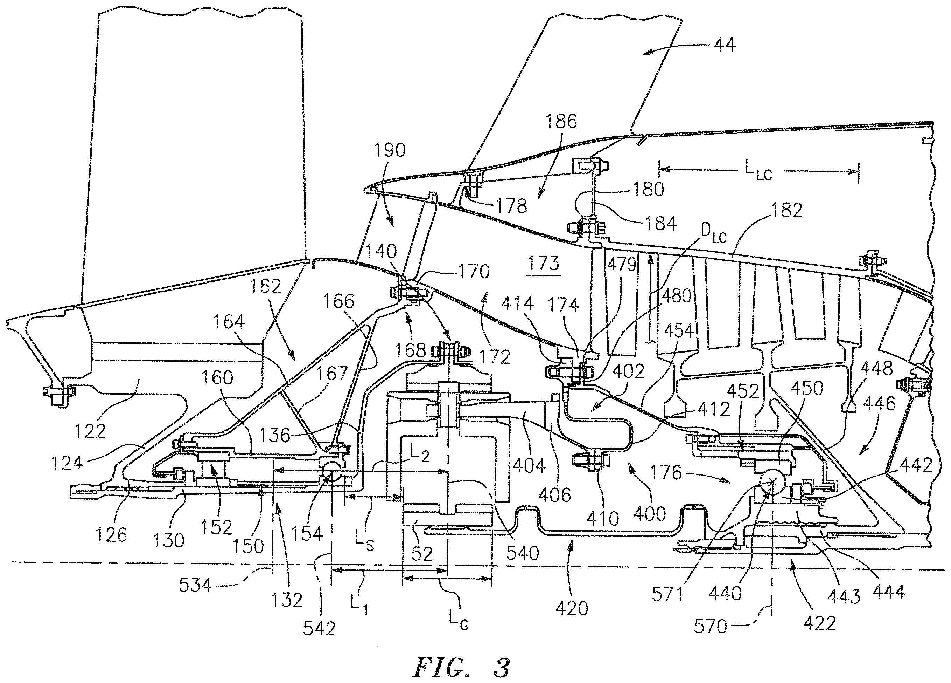

As shown in FIG. 3, in accordance with the claims, the fan shaft 132 is surrounded and supported by a duplex bearing system 150 (e.g., having a forward bearing 152 and an aft bearing 154 spaced apart as described in US 2011/023326A1). As in the '326 publication, a bellows spring may engage an outer race of at least one of the bearings of a duplex tapered roller bearing. The fan shaft thus joins inner races of the two bearings. The outer races of the two bearings are joined by a tubular radially inboard portion 160 of a fan rotor bearing support structure 162 (forward hub structure). The fan rotor bearing support structure includes a forward web 164 extending outward and aftward from an inboard end of the tubular structure 160 at an exemplary angle in the vicinity of 45°. The aft web 166 extends from an aft end of a tubular portion 160 and also extends aftward and outward but at a more radial inclination. The two webs 164, 166 join at a root of an outboard/aft mounting flange 168. As is discussed further below, the fan rotor bearing support structure 162 supports all degrees of freedom of the fan while allowing rotation about the centerline. FIG. 3 also shows a rearwardly converging web 167 joining the web 164 to a rear inboard end of the web 166 and rear end of tubular structure 160.

The flange 168 is mounted to a mating flange 170 of a front frame assembly 172 (e.g., shown having a circumferential array of struts (e.g., airfoil-shaped structures) 173 substantially smaller in number than the vanes 44). This assembly includes radial struts across the core flowpath. The assembly 172 has an inboard rear bolting flange 174 which, as is described further below, is coupled to the star carrier 60 and to a low shaft forward bearing assembly 176. The assembly 172 has an outboard forward mounting flange 178 to which inboard forward portions of the vanes 44 are mounted. The assembly 172 has an outboard rear mounting flange 180 to which an engine case segment 182 is mounted and which, via a radial web 184, is mounted to inboard rear portions of the vanes 44.

The four-sided (viewed in section) structure 186 formed by the outer structures of assembly 172, inner structures of vanes 44 form an annular box beam often called a torque box. The torque box accumulates loads in all degrees of freedom from the radial core strut assembly 172 and distributes loads in all degrees of freedom to the vane array 44. The torque box structure is especially efficient in transmitting torsion loads about the engine centerline and trunnion moments normal to the engine centerline. The torsion and trunnion moments place three degrees of bending load into the vane 44 and strut assembly 172 airfoil shaped structures 173. Alternatively torque box 186 could be a three-sided structure.

A structural load path is thus provided through the fan hub support, the frame strut assembly, the array of vanes 44, to the engine case (and, at least in the exemplary embodiment to a pylon 210).

FIG. 3 shows an array of fan exit stator vanes 190 positioned ahead of the fan frame. These remove swirl from exiting from proximal portion to the fan blades. Such vanes may be integrated into the fan frame in alternative implementations.

The exemplary vanes 44 have a characteristic line 520 (FIG. 2) (e.g., a linear fit to the median of the airfoil shape) at an angle θ₁ relative to the engine centerline 500. The exemplary θ₁ is less than 75° relative to the engine centerline, more narrowly, 55-70°. Alternatively defined, an angle in such a range may be along a majority of the leading and/or trailing edges of the vanes or may be along a majority of the axial span of a median. Such an angle may alternatively be characterized as essentially the angle between centers 521 and 522 respectively of inboard and outboard mounting points or of inboard and outboard ends of the airfoil portion of the vane. If the vanes are canted, such an angle may be a projection onto an intersecting axial/radial plane.

A similarly defined line 524 of the front frame strut assembly (passing through a center 525 of inboard flanges of the airfoil shaped structures 173 and a center 526 of outboard flanges thereof) is at an angle θ₂ relative to the engine centerline. Exemplary θ₂ is steeper (e.g., 70-85°).

A line 528 between a location 529 along a mating face of the outboard flange of the fan rotor bearing support and a center 530(of the axial half section (along bearing transverse centerplane 534) (as shown in FIG. 3) of its bearing system is shown at an angle θ₃ relative to the engine centerline. Exemplary θ₃ is in a similar range to θ₁ above.

A line 532 extends from the bearing center 530 to the location 522 or center of the outboard end of the airfoil of the vane 44. The line is at an angle θ₀ relative to the engine centerline. Exemplary θ₀ is slightly less than θ₁. For example, exemplary θ₀ is about 5° less than θ₁. More broadly, exemplary θ₀ is between 15° less and 5° more than θ₁. An exemplary range is 50-70°.

The combination of angles, most notably θ₁ and θ₃ is such that the force transmission path from the fan bearing system to the fan case stays relatively close to the line 532 (and to the cone represented by revolving that line about the centerline). The line 532 thus locally falls within or nearly within the airfoil of the vane 44 so that fan rotor shear and overturning trunion moments are transmitted in an efficient straight line conical path through vane 44. (e.g., the line 532 does not go more than half of the local chord of the airfoil ahead of the airfoil at any point along the airfoil, more narrowly 20%). Vane 44 is thus load more predominantly in tension or compression. If vane 44 central line 520 is further off the line 532, a given load will induce greater internal bending moments in vane 44. The conical frame structural arrangement therefore, in various embodiments, carries the dominating fan rotor loads more efficiently. The more efficient structure is also stiffer and controls fan blade tip clearances more effectively. Tighter fan tip clearances improve engine performance.

As shown in FIG. 3, centerplane 540 of the gears may be located at a very minimal distance L₁ from the rear fan bearing 154 centerplane 542 by sharply curving the fan shaft hub 136. Exemplary centerplane-to-centerplane distance L₁ is less than about twice the gears' axial length L_{G}, more narrowly, less than about 1.5 times, with an axial spacing L_{S} between the adjacent ends of the gears and bearing 154 less than the gear length L_{G}. The centerplane 540 may be a distance L₂ aft of the center 534 of the fan bearing system of less than about 3.0 times the gear length L_{G}, more narrowly less than about 2.5 times or about 2.0 times.

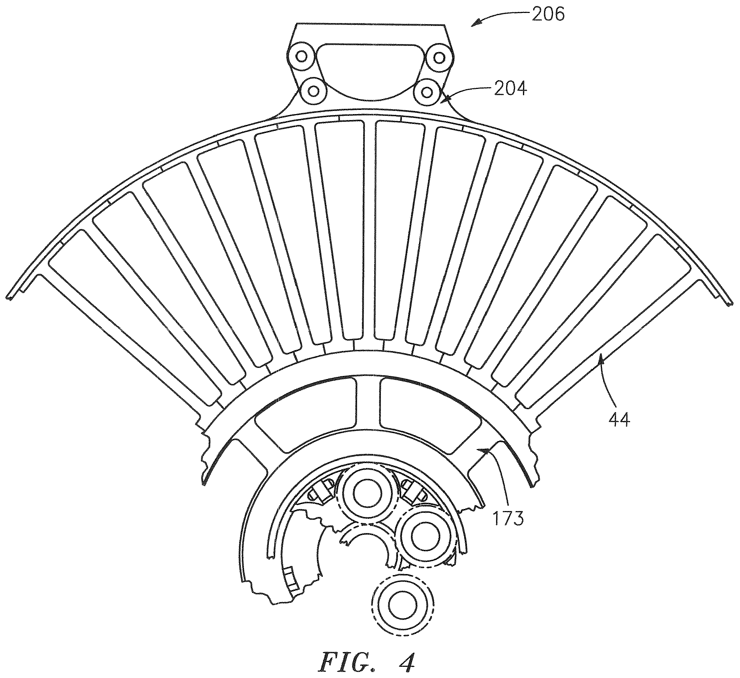

At their outboard ends, the vanes 44 have flanges 200 bolted to an inner ring structure of the fan case to tie the outboard ends of the vanes together. Integral therewith or fastened thereto is a forward mounting structure 204 (e.g., clevises which form part of a four bar mechanism 206 (FIG. 4)) and provides forward support to the engine (e.g., vertical and lateral support).

To mount the engine to the aircraft wing, the pylon 210 is mounted to the mechanism 206 (FIG. 4) (e.g., forming the outer part thereof). The pylon is also mounted to a rear engine mount 208.

The exemplary carrier 60 is held by a flanged flexure structure 400 against rotation about the centerline. The exemplary flanged flexure structure 400 comprises a body 402 mounted to the case and a plurality of fingers 404 extending forward from a ring 406 bringing the body 402 into engagement with the carrier 60 (FIG. 5). The exemplary fingers 404 extend into corresponding apertures in the carrier 60 and are secured via radial pinning near their distal ends. Proximal end portions of the fingers are secured to or unitarily formed with the ring 406 which is bolted to an inboard flange 410 of the body. The flexure has a flexible portion 412 extending in convoluted axial cross-section to an outboard flange 414 bolted to the aft inboard flange 174 of the front frame strut assembly. The flexure, via the fingers, thus retains the carrier 60 against all but small (e.g., vibratory level) rotational movements about the axis 500 while allowing the carrier 60 to otherwise accommodate engine distortion due to thrust loads. Thus, the flange structure and its flexure transmit all or the majority of axial retention torque to the star carrier but do not transmit a majority of axial and radial retention forces to the star carrier 60.

A fan drive input coupling 420 couples the sun gear 52 to the forward portion 422 of the low shaft 25. A forward/distal portion of the coupling 420 is received in the bore of the sun and irrotatably secured thereto. The coupling 420 has sufficient axial and radial compliance so that it effectively only transmits torque about the centerline but allows other angular excursions and position excursions.

Radial support of the low shaft is provided by a plurality of bearing systems. The exemplary forwardmost bearing assembly 176 is a thrust bearing system near the forward end of the shaft. The exemplary thrust bearing system includes a bearing 440 that has an inner race 442 mounted to and encircling a proximal portion 443 of the fan drive input coupling 420 at a forward end of the low shaft. A collar 444 of a hub 446 of the LPC rotor is sandwiched between the shaft and the input coupling proximal portion. The web 448 of the hub 446 extends radially outwardly and forwardly from a junction with an aft end of the collar 444 to join with a web of a disk (the middle of three disks in the example) of the LPC rotor. The outer race 450 of the bearing assembly 176 is mounted to a ring structure 452. A bearing support in the form of a shallow web 454 extends forward and outward from a bolted joint with the ring structure to the bolted joint with the inboard aft flange 174 of the front frame strut assembly. The exemplary web 454 is relatively shallow (e.g., at 10-45° off axial, more narrowly, or 10-40° or 10-35° or 20-40° or 20-35°). Similar angular ranges may exist for angles measured between the center of the forward bolt circle 479 (FIG. 3) of flange 480 or other mounting feature of the bearing support at the forward/outboard end of the web 454 and the center 571 of the individual bearings of the bearing 440 (e.g., the intersection of their rotational axes with the centerplane 570 of the bearing 440 as a whole). The centerplane 570 of the bearing 440 (FIG. 3) may be within an aft half of the longitudinal span L_{LC} of the low rotor (e.g., measured between forward and aft extremities of the first and last stage blades thereof).

The tapering of the hub/web 454 helps facilitate longitudinal compactness by allowing the bearings 440 to be shifted aft and make longitudinal room for the transmission and coupling 420, etc. This may have the effect of shifting the bearings 440 further longitudinally into the low pressure compressor (LPC) section (e.g., so that the centerplane of the bearing 440 may fall within the LPC and, more narrowly, even within the hub 446 and its web 448). Alternatively, at least some portion of the bearing structure will be within the web 448 if not the bearing centerplane. The tapering of the web 448 also facilitates this. In the example, the entire bearing assembly 176 is longitudinally within the LPC rotor.

The various features above and further features below may be implemented in the contexts of reengineering a given directly-driven turbofan engine to add a transmission, reengineering a turbofan engine already having a transmission or reengineering a non-turbofan engine to become a turbofan (e.g., using an existing engine configuration as the basis of the turbofan's gas generator). Relative to a baseline directly-driven turbofan, use of a reduction transmission may allow reduction of engine turbomachinery stage count by allowing the fan to rotate at lower speeds than the LPT. It also permits larger fan diameters, higher engine propulsive efficiency, and lower noise. It also adds complexity to the engine shaft and bearing compartment arrangement. The higher bypass ratio of the larger fan permits a smaller gas generator. Increase in rotor system complexity in conjunction with reduced axial and radial space inside the turbomachinery creates bearing compartment packaging challenges.

The presence of the transmission softens the trunion stiffness between the fan rotor and the low shaft. The engine propulsor (fan rotor, transmission, fan frame, and fan containment case) may,in some engines, comprise half the turbomachinery weight. The propulsor deflects under load as a unit and moves somewhat independently from the gas generator (compressor(s), combustor, turbine(s)). Flexible input shaft coupling and static gear carrier supports are used to isolate these deflections. However excessive deflection in these flexures can cause high cycle fatigue in the flexures and impart increased misalignment loads into the transmission.

The tolerance loop between the low shaft and the sun gear can become quite large if the low shaft is supported through the intermediate frame, LPC, and the front frame. This tolerance offset introduces a constant lateral load the FDGS flexible structures.

If the low shaft is supported through the intermediate frame, the intermediate frame bearing compartment might otherwise require a significant length increase to accommodate the associated components (e.g., accessory drive tower shaft, two bearings, two oil seals to the static structure and one intershaft oil seal). Intershaft oil seals can be unreliable at the high speeds of the small gas generator. The size of this bearing compartment can become quite large and set the length of the turbomachinery in this engine region.

The front frame 172 supports fan thrust and radial loads via the forward hub structure 162 and low shaft thrust and radial loads via the bearing support 454. By supporting the front end of the low shaft directly through the front frame, the low shaft is forced to deflect with the front frame and the remainder of the propulsor. Reduction in the slope and lateral deflections reduces gear mesh wear forces and improves the high cycle fatigue life of the flexible input shafting. Lateral deflections of the sun gear are matched by lateral deflections of the low shaft. The low rotor thrust bearing 440 provides significant trunion stiffness between the low shaft and the bearing support 454. As the low shaft bearing support 454 is rotated by the front frame 172, the front end of the low shaft is forced to bend and maintain slope alignment with the sun gear 52.

Likewise, supporting the front end of the low shaft directly onto the front frame may reduce the number of parts in the tolerance loop between the low shaft and the sun gear. The tolerance mismatch is a constant offset in the flex system that wears the gear teeth and fatigues the flex systems whenever the engine is turning. Improved alignment increases transmission durability.

In various reengineering embodiments, placing the low shaft bearing support on the front frame shortens the engine length and simplifies the oil sealing system (e.g., one statically supported oil seal and one very high speed counter rotating intershaft seal are eliminated from the engine; the LPC rotor hub can be moved aft under the intermediate frame, because the seals are eliminated and the bearing moved in front of the compressor hub). Placement of the LPC hub further aft allows the transmission and the flexible coupling system to move aft. The length of the engine is then set by the aerodynamic constraints of the flowpath and not the underlying rotor structure. The oil sealing durability, reliability, and oil system heat loads may be improved by the seal elimination.

With the low shaft supported by the front frame, there may be the flexibility that the propulsor unit can be disassembled with or without the LPC attached. This flexibility may allow faster access to the both the low and high rotor front bearing compartments, thereby improving assembly, disassembly, and engine maintenance.

The tapering of the web 454 may reduce stiffness. In various embodiments, it may be desirable to stiffen the rotor to raise the natural frequency of the shaft. As is discussed further below, several embodiments involve replacing the bearing assembly 176 with a duplex or modifying it to be duplexed. This duality helps increase the stiffness of interaction between the fixed engine structure (via the web 454) and the front end of the low pressure shaft. The duality thus increases the slope fixity of that end of the shaft which in turn raises the rotor dynamic natural frequency of the engine system and provides more margin.

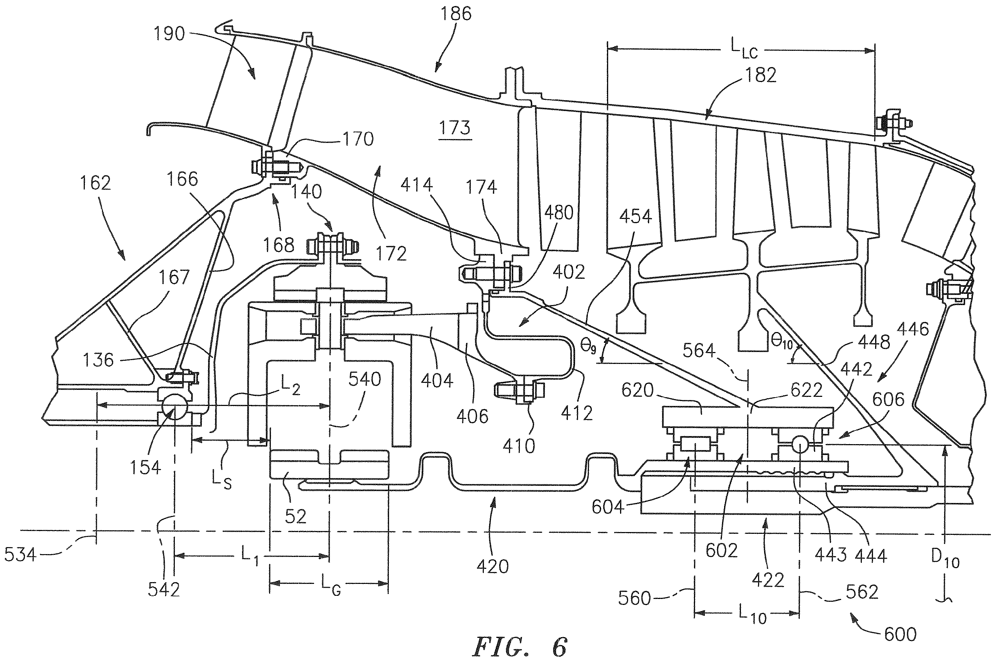

Thus, FIG. 6 shows an alternate engine 600 which may be otherwise similar to the engine 20. The exemplary engine 600 replaces the bearing assembly 176 with a duplex bearing system 602. The duplex bearing system 602 has a forward bearing 604 (e.g., roller bearing) and an aft bearing 606 (e.g., thrust bearing or ball bearing) having respective centerplanes 560 and 562 and defining a centerplane 564 of the system 602.

Each of the bearings 604 and 606 has a respective inner race mounted to the proximal portion 443 as discussed above and an outer race mounted to a ring structure 620. The web 454 joins the ring structure 620 at a junction 622. FIG. 6 further shows the web 454 at a characteristic angle θ₉ tapering inwardly rearwardly. θ₉ may be an average or local value of the web structure or may be along a force line between the junction 622 and the flange 174. Similarly, the angle of the hub 446/web 448 is shown as θ₁₀. Exemplary θ₉ is 10-45°, more narrowly, 10-35° or 15-30°. Exemplary θ₁₀ is greater/steeper than θ₉ (e.g., at least 5° steeper and an exemplary 20-60° or 35-50°).

FIG. 6 further shows a characteristic length L₁₀ of the duplex bearing system defined between the centerplanes 560 and 562. A characteristic diameter of the duplex bearing may be defined by the intersections of the rotational axes of the individual bearing elements with these planes (e.g., an average of the two if different). This average location at the centerplane 602 would also define a center of the half section of the bearing system. Alternatively, the diameter D₁₀ may be defined by the outer diameter or inner diameter of the races of such bearings if convenient. These will be expected to be small departures from each other. An exemplary ratio of the bearing length L₁₀ to diameter D₁₀ is between about 0.4:1 and about 3:1.

In this example, it is also seen that the entire duplex bearing system falls axially within the LPC rotor (e.g., the fore end of the bearing system is aft of the plane of the leading disk of the LPC). Furthermore, in this embodiment, the bearing system centerplane 564 is similarly within the LPC and within or close to within the web 448. The centerplane 562 is within the web 448. Similar to the centerplane 570 of the bearing 440, the centerplane 564 of the bearing system 602 or at least the centerplane 562 of the aft bearing 606 may be in that rear half or even rear third of the longitudinal span L_{LC}. The centerplane 560 of the forward bearing 604 may, however, more likely be in a forward half of the longitudinal span L_{LC}.

The aftward positioning of the bearing 440 or its duplex counterparts may also affect positional relationships relative to other bearings of the engine. In a reengineering situation, for example, this may reduce the relative longitudinal separation between the bearing system 440 (or the center of a duplex or the aft bearing of a duplex) and the next aft bearing (e.g., the centerplane 572 of the high spool bearing 490 (FIG. 2)). This may be characterized relative to a local engine diameter such as the ratio of the low pressure compressor outer diameter (OD) (e.g., a diameter D_{LC} at the tips of the outboardmost blades of the LPC) to the bearing-to-bearing distance L_{BB} (FIG. 2) measured either between the plane of the single bearing 440 and the plane 572 or between the centerplane of the duplex or the aft bearing plane of such a duplex and the plane 572. Exemplary values of this ratio are at least 2.0, more particularly, at least 2.1.

As noted above, such a duplex ball and roller bearing system at the front end of low shaft may, in various embodiments, provide increased overturning trunion stiffness to the end of the LPC shaft and improve alignment. Increased trunion stiffness will improve airfoil tip clearance closures (e.g., of the LPC blades) and increase rotor natural frequencies and reduce rotordynamic strain energy and allow for increased damper functionality. Axial deflections due to the opposite sense of the fan rotor thrust load and the low rotor blow off loads are reduced with the close coupling of the axial load path between the fan rotor and low shaft bearing supports.

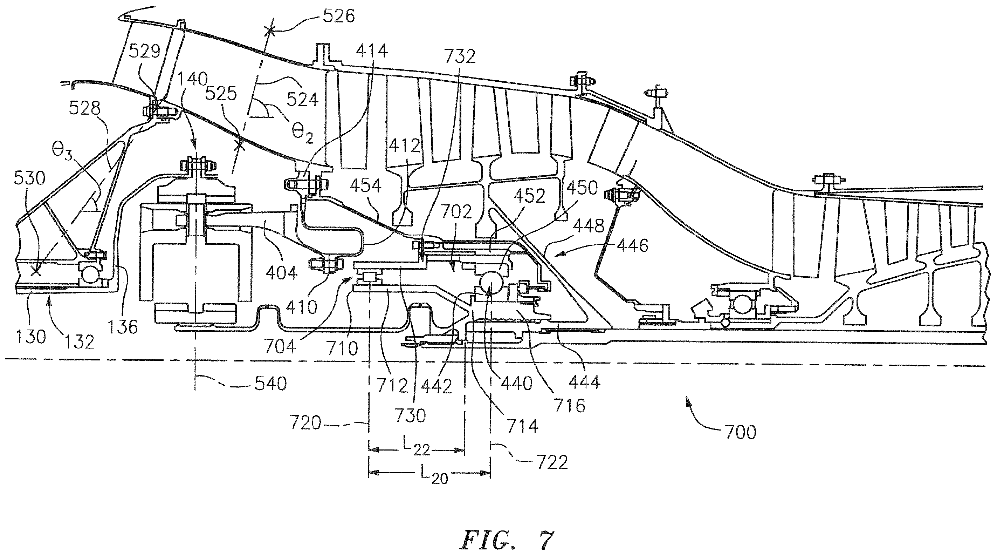

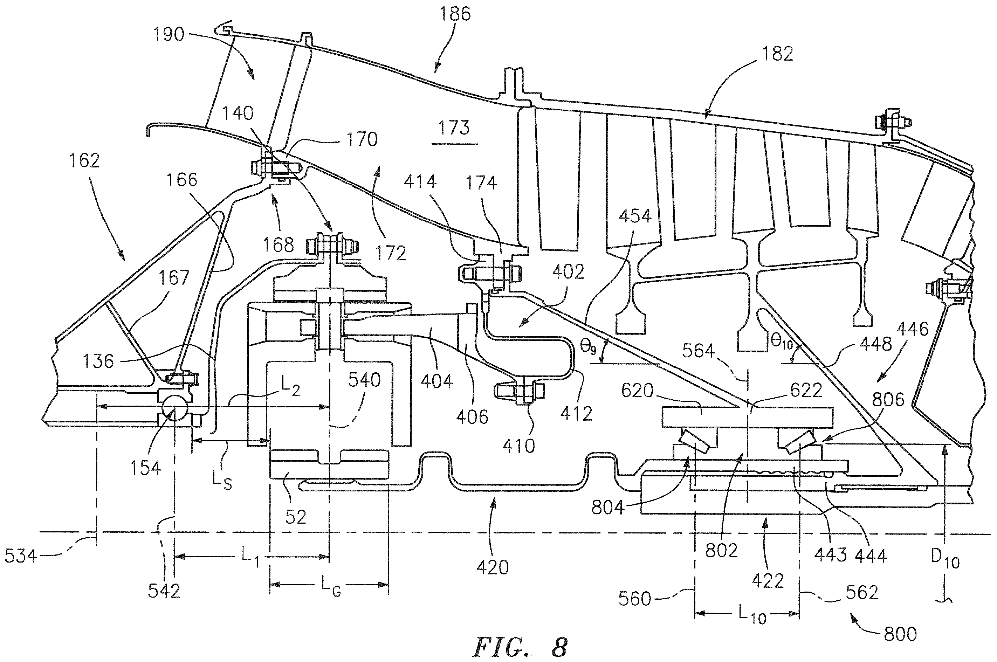

Increasing the separation between the ball and roller duplex system (see one example in FIG. 7) may, in various embodiments, further increase the trunion stiffness benefit. Alternatively or additionally, introduction of a duplex tapered roller system (see FIG. 8) may, in various embodiments, likewise increase trunion stiffness over a similarly spaced ball and roller system.

As noted above, the internal cavity created by the single conical hub (446/448) supported low pressured compressor and the fan drive gear support flexural drive (coupling 420) may allow axial and radial space for the introduction of the duplex bearing system. Additionally, the low rotor in a geared turbofan system may, in various embodiments, spin 2 to 5 times faster than a conventional turbofan. The increased angular velocity of the geared turbofan high speed LPC will have increased a maneuver gyroscopic moments and deflections. The increased speed of the low shaft (as compared to conventional LPCs) will need higher natural frequencies to keep high strain energy modes out of the engine operating rotor speed range. A duplex bearing system in front of the rotor can in various embodiments provide the increase trunion stiffness need to resolve these issues. Thus, these features may be particularly useful in reengineering of engines which involve increase of LPC speed (e.g., via the addition or modification of transmissions). Thus, although the features described in the embodiments above and those in the embodiments below reflect one particular baseline engine, these features may be implemented in other baseline engines or in clean sheet designs with differences in the particular arrangements of LPC and other stages, particular fans, particular transmissions, and other structures coupling and supporting these components/systems.

FIG. 7 shows one example yet an alternate engine 700 wherein a duplex bearing system 702 is formed by adding an additional bearing 704 mechanically in parallel with the bearing 440 and both supported by the shallow web 454. The inboard race 710 of the bearing system 704 is longitudinally cantilevered near the free forward end of a support 712 extending forward from a root/junction 714 of a supporting member 716 at the forward end of the generally rigid low shaft and encircling a forward portion of the collar 444. A length of the bearing system L₂₀ may be defined between centerplanes 720 and 722 of the two bearing systems of the duplex bearing 702 and other dimensions may be as defined for the previously discussed duplex bearings. A cantilever length L₂₂ may be defined as a length between the root 714 and the centerplane 720. The cantilevering may, in various embodiments, allow axial overlap between the duplex bearing and the flex shaft which may form the fan drive input coupling. For example, the exemplary support 712 has a radially forwardly/outwardly divergent proximal portion and joining a longitudinal portion which extends to the forward end and supports the bearing inner race. The divergence of the proximal portion allows it to clear a local convolution in the coupling 420. This allows a relatively greater length L₂₀ in a given overall engine length. In this exemplary embodiment, a greater length may allow greater stiffness of support of the front end of the low shaft. In some embodiments, the two bearing systems of the duplex system may have a difference in diameter across the engine centerline (e.g., if needed to accommodate various other components of the engine). An exemplary ratio of the cantilever length L₂₂ to the bearing length L₂₀ for the inner race 710 of the bearing 704 is at least about 20%.

In the exemplary engine 700, the outer race of the forward bearing system 704 of the duplex bearing 702 is also cantilevered on a support 730, which in this embodiment is separate from the support for bearing 440, extending forward from a junction 732 with an aft/inboard end of the web 454. It is seen that in this particular example, the forward bearing system 704 and its centerplane 720 protrude forward of the LPC rotor while the aft bearing 440 and aft end of the web 454 fall within the LPC rotor (the aft bearing 440 being positioned similarly to FIG. 3). An exemplary ratio of the cantilever distance of the outer race to the bearing distance L₂₀ is at least about 20%.

The support 712 at the center of the bearing length (L₂₀) may be cantilevered by a cantilever distance of at least about 10% of the bearing length (L₂₀).

FIG. 8 shows one embodiment of an alternate engine 800 otherwise similar to the engine of FIG. 6 except that the ball and roller duplex bearing system is replaced with a dual tapered roller duplex bearing system 802 (with forward bearing 804 and aft bearing 806). Otherwise, dimensions, operation, and manufacture may be the same as those of the FIG. 6 embodiment. In exemplary embodiments, the duplex tapered bearing system may be stiffer in the trunion direction than a similarly sized/positioned ball bearing/roller bearing duplex combination.

One or more embodiments have been described. Nevertheless, it will be understood that various modifications may be made. Accordingly, other embodiments are within the scope of the following claims.

## Claims

1. A turbofan engine (20) comprising:
an engine case (22);
a gaspath through the engine case;
a fan (42) having a circumferential array of fan blades (100);
a fan case (40) encircling the fan blades (100) radially outboard of the engine case (22);
a plurality of fan case vanes (44) extending outward from the engine case (22) to the fan case (40);
a front frame assembly (172) comprising a plurality of vanes (173) extending radially across the gas path;
a shaft (25);
a transmission (46) coupling the shaft (25) to a fan shaft (132) to drive the fan (42);
a bearing assembly (176; 602; 702; 802) coupling the shaft (25) to the front frame assembly (172); and
a bearing support (454) extending aftward and radially inward from the front frame assembly (172) to the bearing assembly (176; 602; 702; 802),
**characterised in that**:
the bearing assembly (602; 702; 802) is a duplex bearing comprising a forward bearing (604; 704; 804) and an aft bearing (606; 440; 806); and
further **characterized in that**:
the forward bearing (804) and aft bearing (806) are both tapered roller bearings; or
the forward bearing (704; 804) is a roller bearing and the aft bearing (606; 440) is a ball bearing.

2. The engine of claim 1 wherein the shaft (25) is a low pressure/speed spool shaft (25).

3. The engine of claim 1 or claim 2 wherein the shaft (25) is a flex-shaft.

4. The engine of claim 1, 2 or 3 wherein the bearing support (454) has a main portion tapering at an angle of 10-45° off-axial.

5. The engine of claim 4 wherein the main portion tapers at an angle of 10-35° off-axial.

6. The engine of any preceding claim wherein the bearing support (454) extends partially within a hub of a compressor.

7. The engine of claim 6 wherein the compressor is a low pressure compressor (LPC) (30) having a single hub.

8. The engine of any preceding claim wherein:
the forward bearing (604; 804) has a center spaced apart from a center of the aft bearing (606; 806) by a bearing distance (L₁₀); and
the duplex bearing (602; 802) has a characteristic diameter (D₁₀), a ratio of said bearing distance (L₁₀) to said characteristic diameter (D₁₀) being between about 0.4:1 and about 3:1.

9. The engine of any preceding claim wherein:
the forward bearing is a roller bearing and the aft bearing is a ball bearing,
the forward bearing (704) has a center spaced apart from a center of the aft bearing (440) by a bearing distance (L₂₀); and
the forward bearing (704) has an inboard race (710) longitudinally cantilevered by a cantilever distance (L₂₂) at least about 20% of said bearing distance.

10. The engine of any preceding claim wherein:
the forward bearing is a roller bearing and the aft bearing is a ball bearing,
the forward bearing (704) has a center spaced apart from a center of the aft bearing (440) by a bearing distance (L₂₀); and
the forward bearing (704) has an outboard race longitudinally cantilevered by a cantilever distance at least about 20% of said bearing distance (L₂₀).

11. The engine of any preceding claim wherein:
the forward bearing is a roller bearing and the aft bearing is a ball bearing,
the forward bearing (704) has a center spaced apart from a center of the aft bearing (440) by a bearing distance (L₂₀); and
an inboard support (712) at a center of the bearing distance (L₂₀) is longitudinally cantilevered by a cantilever distance at least about 10% of said bearing distance (L₂₀).

12. The engine of any preceding claim 1-8, wherein the forward bearing (804) and aft bearing (806) are both tapered roller bearings.

13. The engine of any preceding claim wherein:
a fan bearing assembly (150) couples a forward hub structure (162) to the fan shaft (132); and
the fan bearing assembly (150) is a duplex tapered roller bearing assembly and a bellows spring engages an outer race of at least one of the bearings of the duplex tapered roller bearing.

14. The engine of any preceding claim, wherein the fan (42) includes a single fan disk (120) comprising an outer ring (122) to which the fan blades (100) are attached and a forwardly and radially inwardly tapering web (124).

15. The engine of claim 14, wherein the forwardly and radially inwardly tapering web (124) joins a collar (126) at its inboard end that receives a forward portion of a tubular portion (130) of the fan shaft (132).

## Patentansprüche

1. Zweistromtriebwerkmotor (20), umfassend:
ein Motorgehäuse (22);
einen Gasweg durch das Motorgehäuse;
ein Gebläse (42), das ein umlaufendes Array von Gebläseflügeln (100) aufweist;
ein Gebläsegehäuse (40), das die Gebläseflügel (100) radial außerhalb des Motorgehäuses (22) umgibt;
eine Vielzahl von Gebläsegehäuseschaufeln (44), die sich von dem Motorgehäuse (22) nach außen zu dem Gebläsegehäuse (40) erstrecken;
eine Baugruppe (172) eines vorderen Rahmens, umfassend eine Vielzahl von Schaufeln (173), die sich radial über den Gasweg erstrecken;
eine Welle (25);
ein Getriebe (46), das die Welle (25) mit einer Gebläsewelle (132) verbindet, um das Gebläse (42) anzutreiben;
eine Lagerbaugruppe (176; 602; 702; 802), die die Welle (25) mit der Baugruppe (172) des vorderen Rahmens verbindet; und
einen Lagerträger (454), der sich von der Baugruppe (172) des vorderen Rahmens nach hinten und radial nach innen zu der Lagerbaugruppe (176; 602; 702; 802) erstreckt,
**dadurch gekennzeichnet, dass**:
die Lagerbaugruppe (602; 702; 802) ein Duplexlager ist, umfassend ein vorderes Lager (604; 704; 804) und ein hinteres Lager (606; 440; 806); und
ferner **dadurch gekennzeichnet, dass**:
das vordere Lager (804) und das hintere Lager (806) beide Kegelrollenlager sind; oder
das vordere Lager (704; 804) ein Rollenlager ist und das hintere Lager (606; 440) ein Kugellager ist.

2. Motor nach Anspruch 1, wobei die Welle (25) eine Niederdruck- /Drehzahlspulenwelle (25) ist.

3. Motor nach Anspruch 1 oder Anspruch 2, wobei die Welle (25) eine Biegewelle ist.

4. Motor nach Anspruch 1, 2 oder 3, wobei der Lagerträger (454) einen Hauptabschnitt aufweist, der sich in einem Winkel von 10-45° zu einer Achse verjüngt.

5. Motor nach Anspruch 4, wobei sich der Hauptabschnitt in einem Winkel von 10-35° zu der Achse verjüngt.

6. Motor nach einem der vorhergehenden Ansprüche, wobei sich der Lagerträger (454) teilweise innerhalb einer Nabe eines Verdichters erstreckt.

7. Motor nach Anspruch 6, wobei der Verdichter ein Niederdruckverdichter (LPC) (30) ist, der eine einzige Nabe aufweist.

8. Motor nach einem der vorhergehenden Ansprüche, wobei:
das vordere Lager (604; 804) einen Mittelpunkt aufweist, der von einem Mittelpunkt des hinteren Lagers (606; 806) um einen Lagerabstand (L₁₀) beabstandet ist; und
das Duplexlager (602; 802) einen charakteristischen Durchmesser (D₁₀) aufweist, wobei ein Verhältnis des Lagerabstands (L₁₀) zu dem charakteristischen Durchmesser (D₁₀) zwischen etwa 0,4:1 und etwa 3:1 ist.

9. Motor nach einem der vorhergehenden Ansprüche, wobei:
das vordere Lager ein Rollenlager ist und das hintere Lager ein Kugellager ist,
das vordere Lager (704) einen Mittelpunkt aufweist, der von einem Mittelpunkt des hinteren Lagers (440) um einen Lagerabstand (L₂₀) beabstandet ist; und
das vordere Lager (704) einen inneren Laufring (710) aufweist, der in Längsrichtung um einen Auskragungsabstand (L₂₂) von mindestens etwa 20 % des Lagerabstands freitragend ist.

10. Motor nach einem der vorhergehenden Ansprüche, wobei:
das vordere Lager ein Rollenlager ist und das hintere Lager ein Kugellager ist,
das vordere Lager (704) einen Mittelpunkt aufweist, der von einem Mittelpunkt des hinteren Lagers (440) um einen Lagerabstand (L₂₀) beabstandet ist; und
das vordere Lager (704) einen äußeren Laufring aufweist, der in Längsrichtung um einen Auskragungsabstand von mindestens etwa 20 % des Lagerabstands (L₂₀) freitragend ist.

11. Motor nach einem der vorhergehenden Ansprüche, wobei:
das vordere Lager ein Rollenlager ist und das hintere Lager ein Kugellager ist,
das vordere Lager (704) einen Mittelpunkt aufweist, der von einem Mittelpunkt des hinteren Lagers (440) um einen Lagerabstand (L₂₀) beabstandet ist; und
ein innerer Träger (712) in einer Mitte des Lagerabstands (L₂₀) in Längsrichtung um einen Auslegerabstand von mindestens etwa 10 % des Lagerabstands (L₂₀) freitragend ist.

12. Motor nach einem der vorhergehenden Ansprüche 1 bis 8, wobei das vordere Lager (804) und das hintere Lager (806) beide Kegelrollenlager sind.

13. Motor nach einem der vorhergehenden Ansprüche, wobei:
eine Gebläselagerbaugruppe (150) eine vordere Nabenkonstruktion (162) mit der Gebläsewelle (132) verbindet; und
die Gebläselagerbaugruppe (150) eine Duplexkegelrollenlagerbaugruppe ist und eine Balgfeder mit einem Außenlaufring von mindestens einem der Lager des Duplexkegelrollenlagers in Eingriff kommt.

14. Motor nach einem der vorhergehenden Ansprüche, wobei das Gebläse (42) eine einzelne Gebläsescheibe (120) beinhaltet, umfassend einen Außenlaufring (122), an dem die Gebläseflügel (100) befestigt sind, und einen sich nach vorne und radial nach innen verjüngenden Steg (124).

15. Motor nach Anspruch 14, wobei der sich nach vorne und radial nach innen verjüngende Steg (124) an seinem inneren Ende in einen Bund (126) übergeht, der einen vorderen Abschnitt eines rohrförmigen Abschnitts (130) der Gebläsewelle (132) aufnimmt.

## Revendications

1. Turboréacteur à double flux (20) comprenant :
un carter de moteur (22) ;
un trajet de gaz à travers le carter de moteur ;
un ventilateur (42) ayant un réseau circonférentiel de pales de ventilateur (100) ;
un carter de ventilateur (40) encerclant les pales de ventilateur (100) radialement à l'extérieur du carter de moteur (22) ;
une pluralité d'aubes de carter de ventilateur (44) s'étendant vers l'extérieur à partir du carter de moteur (22) jusqu'au carter de ventilateur (40) ;
un ensemble cadre avant (172) comprenant une pluralité d'aubes (173) s'étendant radialement à travers le trajet de gaz ;
un arbre (25) ;
une transmission (46) couplant l'arbre (25) à un arbre de ventilateur (132) pour entraîner le ventilateur (42) ;
un ensemble palier (176 ; 602 ; 702 ; 802) couplant l'arbre (25) à l'ensemble cadre avant (172) ; et
un support de palier (454) s'étendant vers l'arrière et radialement vers l'intérieur à partir de l'ensemble cadre avant (172) jusqu'à l'ensemble palier (176 ; 602 ; 702 ; 802), **caractérisé en ce que** :
l'ensemble palier (602 ; 702 ; 802) est un palier duplex comprenant un palier avant (604 ; 704 ; 804) et un palier arrière (606 ; 440 ; 806) ; et
**caractérisé en outre en ce que** :
le palier avant (804) et le palier arrière (806) sont tous deux des paliers à rouleaux coniques ; ou
le palier avant (704 ; 804) est un palier à rouleaux et le palier arrière (606 ; 440) est un palier à billes.

2. Moteur selon la revendication 1 dans lequel l'arbre (25) est un arbre de bobine basse pression/vitesse (25).

3. Moteur selon la revendication 1 ou la revendication 2 dans lequel l'arbre (25) est un arbre flexible.

4. Moteur selon la revendication 1, 2 ou 3 dans lequel le support de palier (454) a une partie principale conique selon un angle de 10 à 45 ° hors axe.

5. Moteur selon la revendication 4 dans lequel la partie principale est conique selon un angle de 10 à 35 ° hors axe.

6. Moteur selon une quelconque revendication précédente, dans lequel le support de palier (454) s'étend partiellement au sein d'un moyeu d'un compresseur.

7. Moteur selon la revendication 6 dans lequel le compresseur est un compresseur basse pression (LPC) (30) ayant un seul moyeu.

8. Moteur selon une quelconque revendication précédente dans lequel :
le palier avant (604 ; 804) a un centre espacé d'un centre du palier arrière (606 ; 806) par une distance de palier (L₁₀) ; et
le palier duplex (602 ; 802) a un diamètre caractéristique (D₁₀), un rapport de ladite distance de palier (L₁₀) audit diamètre caractéristique (D₁₀) étant entre environ 0,4:1 et environ 3:1.

9. Moteur selon une quelconque revendication précédente dans lequel :
le palier avant est un palier à rouleaux et le palier arrière est un palier à billes,
le palier avant (704) a un centre espacé d'un centre du palier arrière (440) par une distance de palier (L₂₀) ; et
le palier avant (704) a une bague intérieure (710) en porte-à-faux longitudinal d'une distance en porte-à-faux (L₂₂) d'au moins environ 20 % de ladite distance de palier.

10. Moteur selon une quelconque revendication précédente dans lequel :
le palier avant est un palier à rouleaux et le palier arrière est un palier à billes,
le palier avant (704) a un centre espacé d'un centre du palier arrière (440) par une distance de palier (L₂₀) ; et
le palier avant (704) a une bague extérieure en porte-à-faux longitudinal d'une distance en porte-à-faux d'au moins environ 20 % de ladite distance de palier (L₂₀).

11. Moteur selon une quelconque revendication précédente dans lequel :
le palier avant est un palier à rouleaux et le palier arrière est un palier à billes,
le palier avant (704) a un centre espacé d'un centre du palier arrière (440) par une distance de palier (L₂₀) ; et
un support intérieur (712) au niveau d'un centre de la distance de palier (L₂₀) est en porte-à-faux longitudinal d'une distance en porte-à-faux d'au moins environ 10 % de ladite distance de palier (L₂₀).

12. Moteur selon une quelconque revendication précédente 1 à 8, dans lequel le palier avant (804) et le palier arrière (806) sont tous deux des paliers à rouleaux coniques.

13. Moteur selon une quelconque revendication précédente dans lequel :
un ensemble palier de ventilateur (150) couple une structure de moyeu avant (162) à l'arbre de ventilateur (132) ; et
l'ensemble palier de ventilateur (150) est un ensemble palier à rouleaux coniques duplex et un ressort à soufflet entre en prise avec une bague externe d'au moins un des paliers du palier à rouleaux coniques duplex.

14. Moteur selon une quelconque revendication précédente, dans lequel le ventilateur (42) comporte un seul disque de ventilateur (120) comprenant une bague externe (122) à laquelle sont fixées les pales de ventilateur (100) et une nervure conique vers l'avant et radialement vers l'intérieur (124).

15. Moteur selon la revendication 14, dans lequel la bande conique vers l'avant et radialement vers l'intérieur (124) rejoint un collier (126) au niveau de son extrémité intérieure qui reçoit une partie avant d'une partie tubulaire (130) de l'arbre de ventilateur (132).
